# EUROPEAN PATENT SPECIFICATION

(11) **EP 4 012 982 B1**
(45) Date of publication and mention of the grant of the patent: **13.08.2025**
(21) Application number: 19939594.8
(22) Date of filing: 27.09.2019
(51) Int. Cl.: H04L 12/42, B61L 15/00, H04L 12/437, B61C 17/00

(54) **RAIL VEHICLE AND COMMUNICATION NETWORK THEREOF**
SCHIENENFAHRZEUG UND KOMMUNIKATIONSNETZWERK DAFÜR
VÉHICULE FERROVIAIRE ET SON RÉSEAU DE COMMUNICATION

(30) Priority: 30.07.2019 CN 201910694986
(43) Date of publication of application: 15.06.2022
(73) Proprietor: Zhuzhou CRRC Times Electric Co., Ltd., Zhuzhou, Hunan 412001 (CN)
(72) Inventor: ZHANG, Sen, Zhuzhou, Hunan 412001 (CN); HUANG, He, Zhuzhou, Hunan 412001 (CN); FENG, Jianghua, Zhuzhou, Hunan 412001 (CN); CHEN, Gaohua, Zhuzhou, Hunan 412001 (CN); WANG, Yu, Zhuzhou, Hunan 412001 (CN); XU, Shaolong, Zhuzhou, Hunan 412001 (CN); XIONG, Yan, Zhuzhou, Hunan 412001 (CN); XU, Qing, Zhuzhou, Hunan 412001 (CN); LI, Jie, Zhuzhou, Hunan 412001 (CN); LIU, Zhaoyi, Zhuzhou, Hunan 412001 (CN); WANG, Jia, Zhuzhou, Hunan 412001 (CN); BIN, Huajia, Zhuzhou, Hunan 412001 (CN); JIANG, Fan, Zhuzhou, Hunan 412001 (CN); HU, Shijie, Zhuzhou, Hunan 412001 (CN); YAN, Chong, Zhuzhou, Hunan 412001 (CN)
(74) Representative: Peters, Sebastian Martinus
(86) International application number: PCT/CN2019/108370
(87) International publication number: WO 2021/017139

(56) References cited:
- CN-A- 101 425 946
- CN-A- 102 770 325
- CN-A- 103 975 555
- CN-A- 104 221 330
- CN-A- 104 579 606
- CN-U- 207 251 675
- JP-A- 2013 175 957
- US-A1- 2012 318 930
- US-A1- 2014 312 698

## Description

### TECHNICAL FIELD

The present invention relates to a network control technology for trains, in particular to a communication network for rail vehicles, and a rail vehicle.

### BACKGROUND

As the key technology of modern trains, train network control technology can be used to ensure the effectiveness, safety and comfort of train control. It is indispensable for heavy freight trains, high-speed passenger trains, or urban rail transit vehicles.

Examples of a communication network for use in coupled rail vehicles are disclosed in US 2014/0312698 A1 and US 2012/0319830 A1.

At present, the breakthrough of industrial real-time Ethernet technology has profoundly affected the development of the rail transit industry. The data signal communication network adopted by the train on-board network control system has gradually transitioned from the traditional bus communication network in the past to the current Ethernet communication network. Compared with the traditional bus communication network in the past, the real-time Ethernet communication network has various advantages including high bandwidth, strong real-time, and high redundancy.

As the most widely used communication network technology in the world, Ethernet has been well promoted and applied in many product technical fields such as civil and industrial products. With the widespread application of Ethernet technology, the product cost of the components required to establish a communication network is greatly reduced. The common standardized Ethernet communication protocol has also been widely and maturely used, and has been proved to be safe and reliable in actual use.

However, in order to improve the usability of the multi-group Ethernet ring-shaped communication network, the existing multi-group vehicle's Ethernet communication network often adopts a single fixed area location of the network equipment, and the ring-shaped network wire is directly connected across the carriages without separation or cross-connected across the carriages with separation. These two types of ring-shaped Ethernet communication networks inevitably have the disadvantages of high networking and wiring costs, or high costs for network protection design wiring.

Therefore, when the Ethernet communication network of multi-group vehicles is networked, how to maximize the availability of the communication network while taking into account the cost factor, which has become a technical problem in this field. There is an urgent need in the art for a train network control technology to solve the above-mentioned shortcomings in the prior art.

### SUMMARY OF THE INVENTION

The present invention is defined in the appended independent claims to which reference should be made. Advantageous features are set out in the appended dependent claims.

A brief overview of one or more aspects is provided below to provide a basic understanding of these aspects. The summary is not an extensive overview of all of the aspects that are contemplated, and is not intended to identify key or decisive elements in all aspects. The sole purpose of the summary is to present some concepts of one or more aspects in a simplified form as a prelude to the more detailed description that is presented later.

In order to overcome the above-mentioned shortcomings in the prior art, the present invention provides a communication network for rail vehicles, and a rail vehicle, which is used to reduce the networking cost of the Ethernet communication network of multi-group vehicles while to furthest improve the availability of communication networks.

In the above-mentioned communication network for rail vehicles provided by the present invention, according to claim 1.

In the above-mentioned communication network for rail vehicles provided by the present invention, the first area of each carriage in every other carriage can be provided with the first network component, and the second area of each carriage in every other carriage can be provided with the first network component.

In the above-mentioned communication network for rail vehicles provided by the present invention, the first network components can be sequentially arranged in each carriage in such a way that the first area and the second area are alternated.

Furthermore, in the above-mentioned communication network for rail vehicles provided by the present invention, the first communication wire and the second communication wire may form the first communication loop through the first network components arranged in a first lead vehicle and a second lead vehicle.

The above-mentioned communication network for rail vehicles provided by the present invention, further includes :
a third communication wire, the third communication wire may extend through a third area of each carriage; and
a fourth communication wire, the fourth communication wire may extend through a fourth area of each carriage parallel to the third communication wire, and forms a second communication loop with the third communication wire,
wherein, the third area and the fourth area of each carriage may be isolated from each other, the third area of at least part of the carriages and the fourth area of at least part of the carriages may be respectively provided with a second network component for updating the communication data transmitted by the third communication wire and the fourth communication wire.

Furthermore, in the above-mentioned communication network for rail vehicles provided by the present invention, the first area of each carriage in every other carriage may be provided with the first network component, and the second area of each carriage in every other carriage may be provided with the first network component, and the third area of each carriage in every other carriage may be provided with the second network component, and the fourth area of each carriage in every other carriage may be provided with the second network component.

In the above-mentioned communication network for rail vehicles provided by the present invention, the first network components may be sequentially arranged in each carriage in such a way that the first area and the second area are alternate, and the second network components may be sequentially arranged in each carriage in such a way that the third area and the fourth area are alternate.

In the above-mentioned communication network for rail vehicles provided by the present invention, the first area and the third area may be arranged in an upper area of each carriage and are isolated from each other, and the second area and the fourth area may be arranged in a lower area of each carriage and are isolated from each other, the first network component and the second network component in the same carriage may be arranged in the upper area and the lower area of the carriage respectively.

Furthermore, in the above-mentioned communication network for rail vehicles provided by the present invention, the first communication wire and the second communication wire may form the first communication loop through the first network components arranged in a first lead vehicle and a second lead vehicle, the third communication wire and the fourth communication wire may form the second communication loop through the second network components arranged in the first lead vehicle and the second lead vehicle.

Furthermore, in the above-mentioned communication network for rail vehicles provided by the present invention, the area where the first network component is arranged and the area where the second network component is arranged in the first lead vehicle and the second lead vehicle may be isolated from each other.

Furthermore, in the above-mentioned communication network for rail vehicles provided by the present invention, the areas where the first network component and the second network component are arranged in each carriage and the first lead vehicle and the second lead vehicle may include protective isolation area.

Furthermore, in the above-mentioned communication network for rail vehicles provided by the present invention, the first network component and the second network component may include one or more of repeaters, switches, hubs, bridges and routers.

Furthermore, in the above-mentioned communication network for rail vehicles provided by the present invention, the communication network may include Ethernet communication network.

According to another aspect of the present invention, this article also provides a rail vehicle.

The above-mentioned rail vehicle provided by the present invention includes a plurality of carriages, wherein the rail vehicle may include any one of the above-mentioned communication networks for rail vehicles.

Furthermore, the above-mentioned rail vehicle provided by the present invention may include railway vehicles or urban rail transit vehicles.

### BRIEF DESCRIPTION OF THE DRAWINGS

The above features and advantages of the present invention will be better understood after reading the detailed description of the embodiments of the present disclosure in conjunction with the following figures. In the figures, components are not necessarily drawn to scale, and components having similar related features may have the same or similar reference numerals.
Fig. 1 shows a schematic structural diagram of a communication network for rail vehicles.
Fig. 2 shows a schematic structural diagram of a dual-loop communication network for rail vehicles according to an embodiment of the present invention.

### Reference signs

- 10: lead vehicle area;
- 11: the first area;
- 12: the second area
- 13: the first network component;
- 14: the first communication wire;
- 15: the second communication wire;
- 201: the first lead vehicle area;
- 202: the second lead vehicle area;
- 21: the first area;
- 22: the second area;
- 23: the third area;
- 24: the fourth area;
- 251: the first network component;
- 252: the second network component;
- 26: the first communication wire;
- 27: the second communication wire;
- 28: the third communication wire;
- 29: the fourth communication wire.

### DETAILED DESCRIPTION OF THE INVENTION

The embodiments of the present invention are described in the following detailed description. Other advantages and effects of the present invention will be readily apparent to those skilled in the art from this disclosure.

In the description of the present invention, it should be noted that the terms "installation", "connecting", and "connected" should be understood broadly unless explicitly stated and defined otherwise. For example, the terms "installation", "connecting", and "connected" may be either a fixed connection, a detachable connection, or an integral connection; the terms may be either a mechanical connection or an electrical connection; the terms also may be either a direct connection, an indirect connection through an intermediate medium, or an internal connection between two components. The specific meaning of the above terms in the present invention can be understood in a specific case by those skilled in the art.

Understandably, although the terms "first", "second", "third", etc. may be used to describe various components, regions, layers and/or portions to distinguish different components, regions, layers and/or portions, the order of these components, regions, layers and/or portions described above should not be limited by the terms.

In order to overcome the above-mentioned shortcomings in the prior art, the present invention provides an embodiment of a communication network for rail vehicles, and an embodiment of a rail vehicle, which is used to reduce the networking cost of the Ethernet communication network of multi-group vehicles, and to maximize improving the availability of the communication network at the same time.

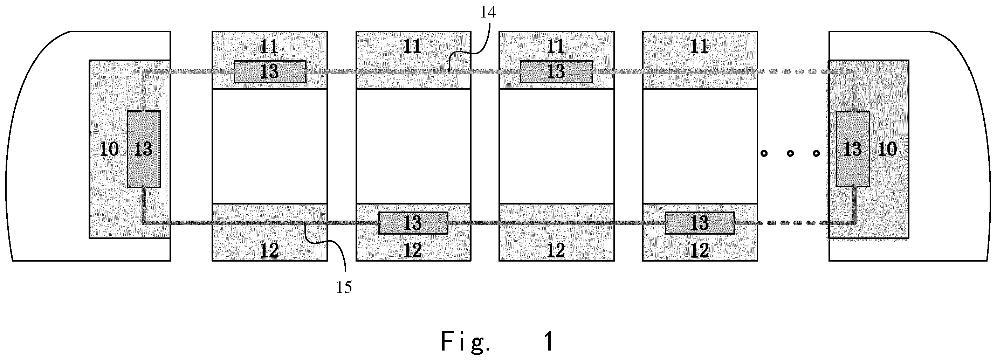

Please refer to Fig. 1, which shows a schematic structural diagram of a communication network for rail vehicles.

As shown in Fig. 1, in the above-mentioned communication network for rail vehicles provided in this embodiment, rail vehicles include but are not limited to railway vehicles or urban rail transit vehicles, may include lead vehicles in two driving directions and a plurality of carriages. The communication network for rail vehicles may include a first communication wire 14 and a second communication wire 15.

The above-mentioned first communication wire 14 may extend through the first area 11 of each carriage of the rail vehicle, so as to communicatively connect the lead vehicle areas 10 located in the two lead vehicles of the rail vehicle.

The above-mentioned second communication wire 15 may extend the second area 12 of each carriage of the rail vehicle parallel to the first communication wire 14, so as to communicatively connect the lead vehicle areas 10 of the two lead vehicles of the rail vehicle and to form the first communication loop of the rail vehicle with the first communication wire 14 together.

In one embodiment, in order to avoid power outages, technical failures, or fire accidents from interfering with the first communication wire 14 and the second communication wire 15, the first area 11 and the second area 12 may be arranged in protective isolation areas located in concealed positions in carriages of the rail vehicle (for example: at the top or bottom of the carriage), so as to avoid man-made or accidental interference factors. The above-mentioned protective isolation areas may refer to isolation areas enclosed in space, so as to prevent the first communication wire 14 and the second communication wire 15 from physical damage and interference such as man-made or accidental collisions and pulls.

Furthermore, the above-mentioned protective isolation areas may also be preferably isolation areas with fire prevention and electromagnetic shielding functions, so as to avoid damage and interference from sudden situations such as fire and strong electromagnetic interference.
one embodiment, the lead vehicle area 10 may be a space protection area provided on a side in the lead vehicle of the rail vehicle close to the carriage. By arranging the lead vehicle area 10 on the side close to the carriage in the lead vehicle, the length of the communication network can be effectively shortened, thereby reducing the wiring cost of the communication network and reducing signal interference in the communication network.

As shown in Fig. 1, in one embodiment, the first area 11 and the second area 12 of each carriage of the rail vehicle can be respectively arranged at the top and bottom of the carriage, thereby realizing that the first communication wire 14 and the second communication wire 15 are isolated from each other. By arranging the first communication wire 14 and the second communication wire 15 for data communication in different areas of the carriage, the two communication wires can be extended in the multiple carriages of the rail vehicle with isolation from each other, thereby avoiding power outages, technical faults or fire accidents to interfere with two communication wires at the same time, so as to improve the basic usability of the overall communication network.

Those skilled in the art can understand, the above-mentioned solution of arranging the first communication wire 14 in the first area 11 at the top of the carriage and arranging the second communication wire 15 in the second area 12 at the bottom of the carriage is only a specific case provided by this embodiment. In other embodiments, those skilled in the art can also reverse the positions of the first area 11 and the second area 12 on basis of the conception of the present invention, or simply increase or decrease the number of space protection areas to obtain the same technical effect as the above embodiments.

Since the first communication wire 14 and the second communication wire 15 are respectively wired in the first area 11 and the second area 12 that are isolated from each other, and are communicatively connected in the lead vehicle area 10 of the two lead vehicles of the rail vehicle to form a ring-shaped communication network, when any communication wire is interfered or damaged, the two lead vehicles of the rail vehicle can still communicate data through the other communication wire.

In addition, since the first communication wire 14 and the second communication wire 15 are separately arranged at the top and bottom of the carriage in any two carriages of the rail vehicle, this separate networking method can further avoid interference of the two communication wires at the same time when strong electromagnetic interference or fire accidents occur at the connection of the carriages, so as to further improve the basic usability of the overall communication network.

Therefore, in the above-mentioned separated ring-shaped network topology provided by this embodiment, any one of the communication wires is interfered or damaged without affecting the basic usability of the overall communication network. Only when interferences or faults occur in the first area 11 and the second area 12 at the same time, the network communication will be affected, so that better anti-interference ability can be obtained.

In one embodiment, in the first area 11 of part of the carriages of the rail vehicle, a first network component 13 for updating the communication data transmitted by the first communication wire 14 may be provided. In the second area 12 of part of the carriages of the rail vehicle, a first network component 13 for updating the communication data transmitted by the second communication wire 15 may be provided. The first communication wire 14 and the second communication wire 15 may form a first communication loop through the first network components 13 arranged respectively in the first lead vehicle and the second lead vehicle.

The above-mentioned communication network for rail vehicles provided in this embodiment may be constituted by the above-mentioned first communication loop, which includes but is not limited to an Ethernet communication network.

Correspondingly, the first network component 13 may be an Ethernet switch for the communication data transmitted by the first communication wire 14 and the second communication wire 15. The first network component 13 includes, but is not limited to, one or more of a repeater, a switch, a hub, a bridge, or a router, and can be used to transmit, enhance, and shunt the communication data in the above-mentioned Ethernet communication network.

Specifically, the above-mentioned Ethernet switches 13 may be sequentially arranged in each carriage of the rail vehicle in such a way that the first area 11 and the second area 12 are alternated. That is to say, in the first area 11 of each carriage of the rail vehicle, the Ethernet switches 13 of the first communication wire 14 can be arranged in every other carriage in the odd-numbered carriages. Correspondingly, in the second area 12 of each carriage of the rail vehicle described above, the Ethernet switches 13 of the second communication wire 15 can also be arranged in every other carriage in the even-numbered carriages.

Those skilled in the art can understand that the solution shown in Fig. 1 in which the Ethernet switches 13 are arranged one by one in manner of alternating first area 11 and second area 12 is only a specific case provided in this embodiment.

By arranging the Ethernet switches 13 of the first communication wire 14 and the second communication wire 15 at intervals in the first area 11 or the second area 12 of different carriages, when accidents such as power outages, fires, etc. occur in any carriage of the rail vehicle, the first communication wire 14 and the second communication wire 15 are effectively prevented from being interfered at the same time, thereby further improving the basic usability of the overall communication network.

In other embodiments, those who skilled in the art can also according to the actual requirements of the transmitted communication data, in a manner of spaced apart any number of carriages, arrange the Ethernet switch 13 of the first communication wire 14 and the second communication wire 15 in different carriages, so as to prevent the first communication wire 14 and the second communication wire 15 from being interfered at the same time.

In order to further improve the overall basic availability of the rail vehicle communication network, thereby ensuring the safety of the lives and property of broad passengers, the present invention further provides a preferred embodiment of a dual-loop communication network for rail vehicles.

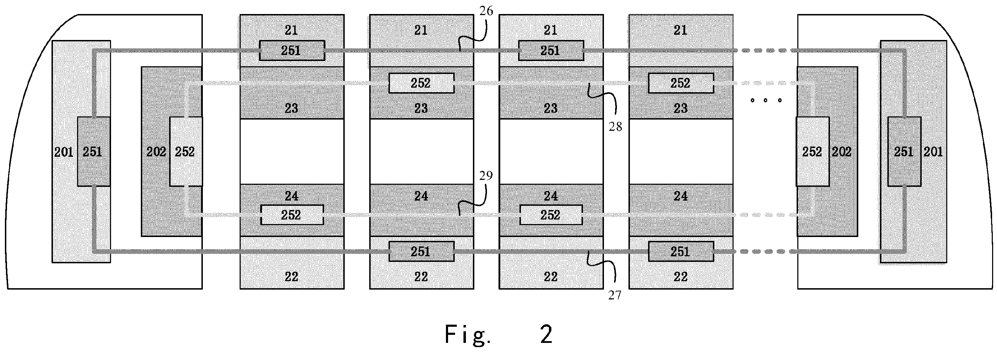

Please further refer to Fig. 2, which shows a schematic structural diagram of a dual-loop communication network for rail vehicles according to an embodiment of the present invention.

As shown in Figure 2, in the above-mentioned dual-loop communication network for rail vehicles provided in this embodiment, rail vehicles include but are not limited to railway vehicles or urban rail transit vehicles, and may include lead vehicles in two driving directions and a plurality of carriages. The dual-loop communication network for rail vehicles may not only include a first communication wire 26 and a second communication wire 27, but also may further include a third communication wire 28 and a fourth communication wire 29.

The above-mentioned first communication wire 26 may extend through the first area 21 of each carriage of the rail vehicle, so as to communicatively connect the first lead vehicle areas 201 located in the two lead vehicles of the rail vehicle.

The above-mentioned second communication wire 27 may extend through the second area 22 of each carriage of the rail vehicle parallel to the first communication wire 26, so as to communicatively connect the first lead vehicle areas 201 located in the two lead vehicles of the rail vehicle, and to form the first communication loop of the rail vehicle with the first communication wire 26 together.

The above-mentioned third communication wire 28 may extend through the third area 23 of each carriage of the rail vehicle, so as to communicatively connect the second lead vehicle areas 202 located in the two lead vehicles of the rail vehicle.

The above-mentioned fourth communication wire 29 may extend through the fourth area 24 of each carriage of the rail vehicle parallel to the third communication wire 28, so as to be communicatively connect the second lead vehicle areas 202 located in the two lead vehicles of the rail vehicle, and to form the second communication loop of the rail vehicle with the third communication wire 28 together.

In one embodiment, in order to avoid power outages, technical faults or fire accidents to interfere with the first communication wire 26, the second communication wire 27, the third communication wire 28 and the fourth communication wire 29 simultaneously, the first area 21 and the third area 23 may be protective isolation areas arranged at the top of the rail vehicle carriages, and the second area 22 and the fourth area 24 may be protective isolation areas arranged at the bottom of the rail vehicle carriages, so as to avoid man-made or accidental interference factors. The above-mentioned protective isolation areas may refer to isolation areas enclosed in space, so as to prevent the first communication wire 26, the second communication wire 27, the third communication wire 28, and the fourth communication wire 29 from physical damage and interference such as man-made or accidental collisions and pulls.

Furthermore, the above-mentioned protective isolation areas may also be preferably isolation areas with fire prevention and electromagnetic shielding functions, so as to avoid damage and interference from sudden situations such as fire and strong electromagnetic interference.

Those who are skilled in the art may understand that the above-mentioned top and bottom of the carriages are only a relative conception. The above-mentioned top of the carriages may further include the upper area of each carriage of the rail vehicle. Correspondingly, the above-mentioned bottom of the carriages may further include the lower area of each carriage of the rail vehicle.

In one embodiment, the first lead vehicle area 201 and the second lead vehicle area 202 may be both a space protection area provided on a side in the lead vehicle of the rail vehicle close to the carriage. By arranging the first lead vehicle area 201 and the second lead vehicle area 202 on the side close to the carriage in the lead vehicle, the length of the communication network can be effectively shortened, thereby reducing the wiring cost of the communication network and reducing signal interference in the communication network.

Those skilled in the art can understand that by arranging the first area 21 of each carriage of the rail vehicle at the top of the carriage, and arranging the second area 22 of each carriage of the rail vehicle at the bottom of the carriage, it can realize that the first communication wire 26 and the second communication wire 27 are isolated from each other. By arranging the third area 23 of each carriage of the rail vehicle at the top of the carriage, while arranging the fourth area 24 of each carriage of the rail vehicle on the bottom of the carriage, it can realize that the third communication wire 28 and the fourth communication wire 29 are isolated from each other. By arranging the first communication wire 26, the second communication wire 27, the third communication wire 28, and the fourth communication wire 29 for data communication in different areas of the carriage, the four communication wires can be extended in the multiple carriages of the rail vehicle with isolation from each other, thereby avoiding power outages, technical faults or fire accidents to interfere with four communication wires at the same time, so as to improve the basic usability of the overall communication network.

Those skilled in the art can understand, the above-mentioned solution of arranging the first communication wire 26 and the third communication wire 28 in the first area 21 and the third area 23 at the top of the carriage and arranging the second communication wire 27 and the fourth communication wire 29 in the second area 22 and the fourth area 24 at the bottom of the carriage, is only a specific case provided by this embodiment, which is mainly used to show the conception of the present invention more clearly, and to provide a specific solution that is convenient for the public to implement, instead of limiting the protection scope of the present invention. In other embodiments, those skilled in the art can also reverse the positions of the first area 21 and the second area 22, or the third area 23 and the fourth area 24 on basis of the conception of the present invention, or simply increase or decrease the number of space protection areas to obtain the same technical effect as the above embodiments.

Since the first communication wire 26 and the second communication wire 27 are respectively wired in the first area 21 and the second area 22 that are isolated from each other, and are communicatively connected in the first lead vehicle areas 201 of the two lead vehicles of the rail vehicle to form a first communication loop, when any communication wire of the first communication wire 26 and the second communication wire 27 is interfered or damaged, the two lead vehicles of the rail vehicle can still communicate data through the other communication wire of the first communication loop.

Similarly, since the third communication wire 28 and the fourth communication wire 29 are respectively wired in the third area 22 and the fourth area 24 that are isolated from each other, and are communicatively connected in the second lead vehicle areas 202 of the two lead vehicles of the rail vehicle to form a second communication loop, when any communication wire of the third communication wire 28 and the fourth communication wire 29 is interfered or damaged, the two lead vehicles of the rail vehicle can still communicate data through the other communication wire of the second communication loop.

By adopting the above-mentioned separated dual-loop network topology structure provided by this embodiment, even if the first communication wire 26 and the second communication wire 27 of the first communication loop are interfered or damaged at the same time in extreme cases, the two lead vehicles of the rail vehicle can still communicate data through the second communication loop, thereby further improving the overall basic usability of the rail vehicle communication network.

Therefore, in the above-mentioned separated ring-shaped network topology structure provided by this embodiment, interference or damage to any communication loop will not affect the basic usability of the overall communication network, thereby ensuring the safety of the lives and property of broad passengers.

In addition, in this embodiment, in any two carriages of the rail train, the first communication wire 26, the second communication wire 27, the third communication wire 28, and the fourth communication wire 29 can be separately arranged at the top and bottom of the carriage. This separate networking method can further avoid interference of the four communication wires at the same time when strong electromagnetic interference or fire accidents occur at the connection of the carriages, so as to further improve the basic usability of the overall communication network.

In one embodiment, in the first area 21 of part of the carriages of the rail vehicle, a first network component 251 for updating the communication data transmitted by the first communication wire 26 may be provided. In the second area 22 of part of the carriages of the rail vehicle, a first network component 251 for updating the communication data transmitted by the second communication wire 27 may be provided. The first communication wire 26 and the second communication wire 27 may form a first communication loop through the first network components 251 arranged respectively in the first lead vehicle and the second lead vehicle.

Similarly, in the third area 23 of part of the carriages of the rail vehicle, a second network component 252 for updating the communication data transmitted by the third communication wire 28 may be provided. In the fourth area 24 of part of the carriages of the rail vehicle, a second network component 252 for updating the communication data transmitted by the fourth communication wire 29 may be provided. The third communication wire 28 and the fourth communication wire 29 may form a second communication loop through the second network components 252 arranged respectively in the first lead vehicle and the second lead vehicle.

The above-mentioned dual-loop communication network for rail vehicles provided in this embodiment may be constituted of the above-mentioned first communication loop and the above-mentioned second communication loop. The dual-loop communication network for rail vehicles includes but is not limited to an Ethernet communication network.

Correspondingly, the first network component 251 may be an Ethernet switch for the communication data transmitted by the first communication wire 26 and the second communication wire 27, and the second network component 252 may be an Ethernet network switch for the communication data transmitted by the third communication wire 28 and the fourth communication wire 29. The first network component 251 and the second network component 252 include, but are not limited to, one or more of repeaters, switches, hubs, bridges, or routers, and can be used to transmit, enhance, and shunt the communication data in the above-mentioned Ethernet communication network.

Specifically, the above-mentioned first network component 251 may be sequentially arranged in each carriage of the rail vehicle in such a way that the first area 21 and the second area 22 are alternated. That is to say, in the first area 21 of each carriage of the rail vehicle, the first network components 251 of the first communication wire 26 can be arranged in every other carriage in the odd-numbered carriages. Correspondingly, in the second area 22 of each carriage of the rail vehicle described above, the first network components 251 of the second communication wire 27 can also be arranged in every other carriage in the even-numbered carriages.

Correspondingly, the above-mentioned second network components 252 may be sequentially arranged in each carriage of the rail vehicle in such a way that the third area 23 and the fourth area 24 are alternated. That is to say, in the third area 23 of each carriage of the rail vehicle, the second network components 252 of the third communication wire 28 can be arranged in every other carriage in the even-numbered carriages. Correspondingly, in the fourth area 24 of each carriage of the rail vehicle described above, the second network components 252 of the fourth communication wire 29 can also be arranged in every other carriage in the odd-numbered carriages.

Those skilled in the art can understand that the solution shown in Fig. 2 in which the first network components 251 are arranged one by one in manner of alternating first area 21 and second area 22, and the second network components 252 are arranged one by one in manner of alternating third area 23 and fourth area 24, is only a specific case provided in this embodiment, and is mainly used to show the conception of the present invention more clearly, and to provide a specific solution that is convenient for the public to implement, instead of limiting the protection scope of the present invention.

By arranging the first network components 251 and the second network components 252 at intervals in the first area 21, the second area 22, the third area 23 and the fourth area of different carriages, when accidents such as power outages, fires, etc. occur in any carriage of the rail vehicle, the first communication loop and the second communication loop are effectively prevented from being interfered at the same time, thereby further improving the basic usability of the overall communication network.

In other embodiments, those who skilled in the art may also arrange the first network components 251 of the first communication loop and the second network components 252 of the second communication loop in different carriages in manner of spaced apart by any number of carriages, according to the actual requirements for the transmitted communication data, so as to prevent the first communication loop and the second communication loop from being interfered at the same time.

In one embodiment, by arranging the first area 21 and the third area 23 in the protective isolation area at the top of the rail vehicle carriage, and arranging the second area 22 and the fourth area 24 in the protective isolation area at the bottom of the rail vehicle carriage, the first network components 251 of the first communication loop and the second network components 252 of the second communication loop may be arranged in the upper area and the lower area of the carriages, respectively, so as to realize the isolation of the first network component 251 and the second network component 252 from each other, so as to prevent the first communication loop and the second communication loop from being damaged and interfered at the same time.

Furthermore, the first area 21 and the third area 23 arranged at the top of the rail vehicle carriage may preferably be isolated from each other. The second area 22 and the fourth area 24 arranged at the bottom of the rail vehicle carriage may preferably be isolated from each other. The first lead vehicle area 201 and the second lead vehicle area 202 arranged in the two lead vehicles of the rail vehicle may also be preferably isolated from each other. The above-mentioned isolation includes, but is not limited to, spatial isolation, fire isolation, waterproof isolation, and electromagnetic shielding isolation.

By adopting this mutually isolated double-loop network topology, the first communication wire 26 and the third communication wire 28 in the same carriage can be further isolated from each other, and the second communication wire 27 and the fourth communication wire 29 can be isolated from each other, thereby realizing the effect of isolating the first communication loop and the second communication loop, so as to prevent the first communication loop and the second communication loop from being interfered or damaged at the same time, so as to further improve the basic usability of the overall communication network.

Although the method is illustrated and described as a series of actions for the purpose of simplifying the explanation, it should be understood and appreciated that these methods are not limited by the order of the actions. Those skilled in the art may understand that some actions may occur in different orders and/or concurrently with other actions that are illustrated and described herein or that are not illustrated and described herein, in accordance with one or more embodiments.

According to another aspect of the present invention, the present disclosure also provides an embodiment of a rail vehicle.

As shown in Fig. 1 and Fig. 2, the above-mentioned rail vehicles provided in this embodiment include but are not limited to railway vehicles or urban rail transit vehicles, which may include lead vehicles in two driving directions and a plurality of carriages, as well as the communication network for rail vehicles provided by any one of the above-mentioned embodiments, so as to reduce the networking cost of the Ethernet communication network of multi-group vehicles, and to maximize the availability of the communication network at the same time.

The previous description of the disclosure is provided to enable any person skilled in the art to make or use the disclosure. Thus, the present disclosure is not intended to be limited to the examples and designs described herein, rather by the scope of the attached claims.

## Claims

1. A communication network for a rail vehicle, the rail vehicle includes a plurality of carriages, the communication network comprises:
a first communication wire, the first communication wire extends through a first area of each carriage;
a second communication wire, the second communication wire extends, in parallel with the first communication wire, through a second area of each carriage, and forms a first communication loop with the first communication wire;
a third communication wire, the third communication wire extends through a third area of each carriage; and
a fourth communication wire, the fourth communication wire extends, in parallel with the third communication wire, through a fourth area of each carriage, and forms a second communication loop with the third communication wire,
wherein, the first area and the second area of each carriage are isolated from each other, and the third area and the fourth area of each carriage are isolated from each other,
the first area of at least part of the carriages and the second area of at least part of the carriages are respectively provided with a first network component for updating communication data transmitted by the first communication wire and the second communication wire,
the third area of at least part of the carriages and the fourth area of at least part of the carriages are respectively provided with a second network component for updating the communication data transmitted by the third communication wire and the fourth communication wire
the first network components are sequentially arranged in each carriage in such a way that the first area and the second area are alternated, and the second network components are sequentially arranged in each carriage in such a way that the third area and the fourth area are alternated,
the first area and the third area are arranged in an upper area of each carriage and are isolated from each other, and the second area and the fourth area are arranged in a lower area of each carriage and are isolated from each other,
the first network component and the second network component in the same carriage are arranged in the upper area and the lower area of the carriage respectively.

2. The communication network of claim 1, wherein every other carriage of the carriages is provided with the first network component in the first area, and every other carriage of the carriages is provided with the first network component in the second area.

3. The communication network of any one of claims 1 - 2, wherein the first communication wire and the second communication wire form the first communication loop through the first network components arranged in a first lead vehicle and a second lead vehicle.

4. The communication network of claim 1, wherein every other carriage of the carriages is provided with the first network component in the first area, and every other carriage of the carriages is provided with the first network component in the second area, and
every other carriage of the carriages is provided with the second network component in the third area, and every other carriage of the carriages is provided with the second network component in the fourth area.

5. The communication network of any one of claim 3, wherein the third communication wire and the fourth communication wire form the second communication loop through the second network components arranged in the first lead vehicle and the second lead vehicle.

6. The communication network of claim 5, wherein the area where the first network component is arranged and the area where the second network component is arranged in the first lead vehicle and the second lead vehicle are isolated from each other.

7. The communication network of claim 6, wherein the areas where the first network component and the second network component are arranged in each carriage and the first lead vehicle and the second lead vehicle include protective isolation area.

8. The communication network of claim 7, wherein the first network component and the second network component comprise one or more of repeaters, switches, hubs, bridges and routers.

9. The communication network of claim 1, wherein the communication network comprises Ethernet communication network.

10. A rail vehicle, which comprises a plurality of carriages, wherein the rail vehicle comprises the communication network recited in any one of claim 1 - 9.

11. The rail vehicle of claim 10, wherein the rail vehicle comprises railway vehicles and urban rail transit vehicles.

## Patentansprüche

1. Kommunikationsnetzwerk für ein Schienenfahrzeug, wobei das Schienenfahrzeug eine Vielzahl von Wagen umfasst, wobei das Kommunikationsnetzwerk Folgendes umfasst:
eine erste Kommunikationsleitung, wobei sich die erste Kommunikationsleitung durch einen ersten Bereich jedes Wagens erstreckt;
eine zweite Kommunikationsleitung, wobei sich die zweite Kommunikationsleitung parallel zu der ersten Kommunikationsleitung durch einen zweiten Bereich jedes Wagens erstreckt und eine erste Kommunikationsschleife mit der ersten Kommunikationsleitung bildet;
eine dritte Kommunikationsleitung, wobei sich die dritte Kommunikationsleitung durch einen dritten Bereich jedes Wagens erstreckt; und
eine vierte Kommunikationsleitung, wobei sich die vierte Kommunikationsleitung parallel zu der dritten Kommunikationsleitung durch einen vierten Bereich jedes Wagens erstreckt und eine zweite Kommunikationsschleife mit der dritten Kommunikationsleitung bildet,
wobei der erste Bereich und der zweite Bereich jedes Wagens voneinander isoliert sind, und der dritte Bereich und der vierte Bereich jedes Wagens voneinander isoliert sind,
wobei der erste Bereich von zumindest einem Teil der Wagen und der zweite Bereich von zumindest einem Teil der Wagen jeweils mit einer ersten Netzwerkkomponente zum Aktualisieren von Kommunikationsdaten, die mittels der ersten Kommunikationsleitung und der zweiten Kommunikationsleitung übertragen werden, vorgesehen sind,
wobei der dritte Bereich von zumindest einem Teil der Wagen und der vierte Bereich von zumindest einem Teil der Wagen jeweils mit einer zweiten Netzwerkkomponente zum Aktualisieren der Kommunikationsdaten, die mittels der dritten Kommunikationsleitung und der vierten Kommunikationsleitung übertragen werden, vorgesehen sind,
wobei die ersten Netzwerkkomponenten derart sequenziell in jedem Wagen angeordnet sind, dass der erste Bereich und der zweite Bereich abgewechselt werden, und die zweiten Netzwerkkomponenten derart sequenziell in jedem Wagen angeordnet sind, dass der dritte Bereich und der vierte Bereich abgewechselt werden,
wobei der erste Bereich und der dritte Bereich in einem oberen Bereich jedes Wagens angeordnet sind und voneinander isoliert sind, und der zweite und der vierte Bereich in einem unteren Bereich jedes Wagens angeordnet sind und voneinander isoliert sind,
wobei die erste Netzwerkkomponente und die zweite Netzwerkkomponente in demselben Wagen jeweils in dem oberen Bereich und dem unteren Bereich des Wagens angeordnet sind.

2. Kommunikationsnetzwerk nach Anspruch 1, wobei jeder zweite Wagen der Wagen mit der ersten Netzwerkkomponente in dem ersten Bereich vorgesehen ist und jeder zweite Wagen der Wagen mit der ersten Netzwerkkomponente in dem zweiten Bereich vorgesehen ist.

3. Kommunikationsnetzwerk nach einem beliebigen der Ansprüche 1 oder 2, wobei die erste Kommunikationsleitung und die zweite Kommunikationsleitung die erste Kommunikationsschleife durch die ersten Netzwerkkomponenten, die in einem ersten Führungsfahrzeug und einem zweiten Führungsfahrzeug angeordnet sind, bilden.

4. Kommunikationsnetzwerk nach Anspruch 1, wobei jeder zweite Wagen der Wagen mit der ersten Netzwerkkomponente in dem ersten Bereich vorgesehen ist und jeder zweite Wagen der Wagen mit der ersten Netzwerkkomponente in dem zweiten Bereich vorgesehen ist, und
jeder zweite Wagen der Wagen mit der zweiten Netzwerckomponente in dem dritten Bereich vorgesehen ist und jeder zweite Wagen der Wagen mit der zweiten Netzwerkkomponente in dem vierten Bereich vorgesehen ist.

5. Kommunikationsnetzwerk nach einem beliebigen von Anspruch 3, wobei die dritte Kommunikationsleitung und die vierte Kommunikationsleitung die zweite Kommunikationsschleife durch die zweiten Netzwerkkomponenten, die in dem ersten Führungsfahrzeug und dem zweiten Führungsfahrzeug angeordnet sind, bilden.

6. Kommunikationsnetzwerk nach Anspruch 5, wobei der Bereich, in dem die erste Netzwerkkomponente angeordnet ist, und der Bereich, in dem die zweite Netzwerkkomponente angeordnet ist, in dem ersten Führungsfahrzeug und dem zweiten Führungsfahrzeug voneinander isoliert sind.

7. Kommunikationsnetzwerk nach Anspruch 6, wobei die Bereiche, in denen die erste Netzwerkkomponente und die zweite Netzwerkkomponente angeordnet sind, in jedem Wagen und dem ersten Führungsfahrzeug und dem zweiten Führungsfahrzeug einen Schutzisolierungsbereich umfassen.

8. Kommunikationsnetzwerk nach Anspruch 7, wobei die erste Netzwerkkomponente und die zweite Netzwerkkomponente eines oder mehrere von Repeatern, Switches, Hubs, Bridges und Routern umfassen.

9. Kommunikationsnetzwerk nach Anspruch 1, wobei das Kommunikationsnetzwerk ein Ethernet-Kommunikationsnetzwerk umfasst.

10. Schienenfahrzeug, das eine Vielzahl von Wagen umfasst, wobei das Schienenfahrzeug das Kommunikationsnetzwerk nach einem beliebigen der Ansprüche 1 bis 9 umfasst.

11. Schienenfahrzeug nach Anspruch 10, wobei das Schienenfahrzeug Bahnfahrzeuge und Stadt- bzw. Straßenbahnfahrzeuge umfasst.

## Revendications

1. Réseau de communication pour véhicule ferroviaire, le véhicule ferroviaire comprenant une pluralité de wagons, le réseau de communication comprenant :
un premier câble de communication, le premier câble de communication s'étendant à travers une première zone de chaque wagon ;
un deuxième câble de communication, le deuxième câble de communication s'étendant, parallèlement au premier câble de communication, à travers une deuxième zone de chaque wagon, et formant une première boucle de communication avec le premier câble de communication ;
un troisième câble de communication, le troisième câble de communication s'étendant à travers une troisième zone de chaque wagon ; et
un quatrième câble de communication, le quatrième câble de communication s'étendant, parallèlement au troisième câble de communication, à travers une quatrième zone de chaque wagon, et formant une deuxième boucle de communication avec le troisième câble de communication ;
dans lequel, la première zone et la deuxième zone de chaque wagon sont isolées l'une de l'autre, et la troisième zone et la quatrième zone de chaque wagon sont isolées l'une de l'autre,
la première zone d'au moins une partie des wagons et la deuxième zone d'au moins une partie des wagons sont respectivement dotées d'un premier composant de réseau pour mettre à jour les données de communication transmises par le premier câble de communication et le deuxième câble de communication,
la troisième zone d'au moins une partie des wagons et la quatrième zone d'au moins une partie des wagons sont respectivement dotées d'un deuxième composant de réseau pour mettre à jour les données de communication transmises par le troisième câble de communication et le quatrième câble de communication,
les premiers composants de réseau sont séquentiellement agencés dans chaque wagon de telle sorte que la première zone et la deuxième zone sont alternées, et les deuxièmes composants de réseau sont séquentiellement agencés dans chaque wagon de telle sorte que la troisième zone et la quatrième zone sont alternées,
la première zone et la troisième zone sont agencées dans une zone supérieure de chaque wagon et sont isolées l'une de l'autre, et la deuxième zone et la quatrième zone sont agencées dans une zone inférieure de chaque wagon et sont isolées l'une de l'autre,
le premier composant de réseau et le deuxième composant de réseau dans le même wagon sont agencés respectivement dans la zone supérieure et la zone inférieure du wagon.

2. Réseau de communication selon la revendication 1, dans lequel chaque autre wagon des wagons est doté du premier composant de réseau dans la première zone, et chaque autre wagon des wagons est doté du premier composant de réseau dans la deuxième zone.

3. Réseau de communication selon l'une quelconque des revendications 1 à 2, dans lequel le premier câble de communication et le deuxième câble de communication forment la première boucle de communication à travers les premiers composants de réseau agencés dans un premier véhicule de tête et un deuxième véhicule de tête.

4. Réseau de communication selon la revendication 1, dans lequel chaque autre wagon des wagons est doté du premier composant de réseau dans la première zone, et chaque autre wagon des wagons est doté du premier composant de réseau dans la deuxième zone, et
chaque autre wagon des wagons est doté du deuxième composant de réseau dans la troisième zone, et chaque autre wagon des wagons est doté du deuxième composant de réseau dans la quatrième zone.

5. Réseau de communication selon l'une quelconque de la revendication 3, dans lequel le troisième câble de communication et le quatrième câble de communication forment la deuxième boucle de communication à travers les deuxièmes composants de réseau agencés dans le premier véhicule de tête et le deuxième véhicule de tête.

6. Réseau de communication selon la revendication 5, dans lequel la zone où le premier composant de réseau est agencé et la zone où le deuxième composant de réseau est agencé dans le premier véhicule de tête et le deuxième véhicule de tête sont isolées l'une de l'autre.

7. Réseau de communication selon la revendication 6, dans lequel les zones où le premier composant de réseau et le deuxième composant de réseau sont agencés dans chaque wagon et le premier véhicule de tête et le deuxième véhicule de tête comprennent une zone d'isolation protectrice.

8. Réseau de communication selon la revendication 7, dans lequel le premier composant de réseau et le deuxième composant de réseau comprennent un ou plusieurs de répéteurs, commutateurs, concentrateurs, ponts et routeurs.

9. Réseau de communication selon la revendication 1, dans lequel le réseau de communication comprend un réseau de communication Ethernet.

10. Véhicule ferroviaire, qui comprend une pluralité de wagons, dans lequel le véhicule ferroviaire comprend le réseau de communication mentionné dans l'une quelconque des revendications 1 à 9.

11. Véhicule ferroviaire selon la revendication 10, dans lequel le véhicule ferroviaire comprend des véhicules sur rails et des véhicules de transport ferroviaire urbain.
